# EUROPÄISCHE PATENTSCHRIFT

(11) **EP 1 361 019 B1**
(45) Veröffentlichungstag und Bekanntmachung des Hinweises auf die Patenterteilung: **12.10.2005**
(21) Anmeldenummer: 03004547.0
(22) Anmeldetag: 28.02.2003
(51) Int. Cl.: B23Q 9/00, B23D 47/02, B27B 9/04

(54) **Führungsschiene**
Guide rail
Rail de guidage

(30) Priorität: 07.05.2002 DE 10220363
(43) Veröffentlichungstag der Anmeldung: 12.11.2003
(73) Patentinhaber: Mafell AG, 78727 Oberndorf (DE)
(72) Erfinder: Hipp, Ottmar, 72172 Sulz-Fischingen (DE); Schellhammer, Karl, 72172 Sulz-Fischingen (DE)
(74) Vertreter: Manitz, Finsterwald & Partner GbR

(56) Entgegenhaltungen:
- AU-A- 2 647 684
- DE-A- 3 606 525
- US-A- 4 463 644

## Beschreibung

Die Erfindung betrifft Führungsschienen gemäß dem Oberbegriff von Anspruch 1, wie sie z. Bsp. aus der US 4 463 644 bekannt sind, für elektrische Bearbeitungsmaschinen, insbesondere für Handkreissägen, Stichsägen und Oberfräsen, deren Oberseite als Führung für die Bearbeitungsmaschine, insbesondere für eine Maschinengrundplatte, ausgebildet sind und die mit ihrer Unterseite an ein zu bearbeitendes Werkstück anlegbar sind.

Bei derartigen Führungsschienen besteht das Problem, dass sie bei einer Vielzahl von Anwendungen eine relativ große Länge von in den meisten Fällen mindestens etwa 1 m aufweisen müssen, um z.B. Platten oder andere lange Werkstücke bearbeiten zu können. Der Transport derartiger sperriger Führungsschienen ist umständlich, da nicht nur die bloße Länge der Führungsschiene, sondern auch die Tatsache störend ist, dass der Handwerker die Führungsschiene nur getrennt von der beispielsweise in einem Transportkoffer verstaubaren Bearbeitungsmaschine mit sich führen kann.

Ein weiteres Problem entsteht in Verbindung mit verschwenkbaren Bearbeitungsmaschinen wie beispielsweise Handkreissägen, die zur Ausführung von Schräg- oder Gehrungsschnitten einerseits an der Schiene geführt, andererseits aber relativ zur Schiene verschwenkt werden müssen. Aufgrund der relativ großen Dicke der Führungsschiene, die erforderlich ist, um bei den bekannten Führungsschienen die gewünschte Steifigkeit sicherzustellen, besteht die Gefahr, dass die Bearbeitungsmaschine in die untere, maschinennahe Kante der Führungsschiene hineingeschwenkt wird, so dass ab einem von den konkreten Abmessungen abhängigen Verschwenkungsgrad eine Verwendung der Führungsschiene nicht mehr möglich ist.

Diesem Problem kann man durch Querversetzen der Maschine auf der Führungsschiene begegnen, indem zum Arbeiten unter relativ großen Neigungswinkeln die Bearbeitungsmaschine und damit das Werkzeug, z.B. das Sägeblatt einer Handkreissäge, nach außen versetzt und an für diese Fälle zusätzlich vorgesehenen Führungsmitteln geführt wird. Ein derartiges Umsetzen der Maschine ist aber in der Praxis lästig und führt außerdem dazu, dass die Stelle, an der das Werkzeug, also z.B. das Sägeblatt, in die Oberfläche des Werkstücks eintaucht, nicht für alle Neigungswinkel des Werkzeugs die gleiche ist.

Aufgabe der Erfindung ist es, den Umgang mit Führungsschienen der eingangs genannten Art für den Benutzer zu erleichtern und zu vereinfachen, wobei insbesondere der Umgang mit der Führungsschiene sowohl im Hinblick auf Transport und Aufbewahrung als auch im Hinblick auf die Verwendung mit verschwenkbaren Bearbeitungsmaschinen wie z.B. Handkreissägen und Stichsägen auch bei großen Neigungswinkeln verbessert werden soll.

Die Lösung dieser Aufgabe erfolgt durch die Merkmale des Anspruchs 1.

Gemäß der Erfindung ist die Schiene zumindest bereichsweise flexibel derart ausgebildet, dass sie aus einer langgestreckten Benutzungskonfiguration in eine kompakte Transport- und/oder Aufbewahrungskombination überführt werden kann.

Hierbei wird bewusst auf die bekannte steife, praktisch nicht verbiegbare Ausbildung der Führungsschiene verzichtet und statt dessen ein anderer Weg eingeschlagen, nämlich der Schiene eine Flexibilität bzw. Beweglichkeit zumindest bezüglich der Längsrichtung verliehen, die es ermöglicht, die Schiene in eine Konfiguration zu bringen, in der ihre größte Abmessung gegenüber ihrer Länge in der Benutzungskonfiguration deutlich reduziert ist. Erfindungsgemäß wurde erkannt, dass die Steifigkeit und die hierfür erforderliche Dicke der bekannten Führungsschienen zumindest in dem während der Benutzung auf dem Werkstück aufliegenden Bereich keine wesentlichen Vorteile mit sich bringen.

Die flexible oder in sich bewegliche Schiene kann dabei durch Aufrollen oder Aufwickeln in die Transportkonfiguration gebracht werden, so dass eine geschlossene Ringform mit z.B. kreisförmiger, elliptischer oder ovaler Gestalt entsteht. Die maximale Abmessung der Schiene wird auf diese Weise mindestens halbiert.

Die Flexibilität der Schiene wird vorzugsweise dadurch erreicht, dass die Schiene im Vergleich zu den bekannten steifen Führungsschienen, die eine Dicke in der Größenordnung von 5 mm bis 15 mm aufweisen, sehr dünn ausgeführt wird. Die Schiene kann als Blechschiene ausgebildet und beispielsweise aus einem Blechmaterial mit einer Stärke im Bereich von 0,3 bis 0,5 mm ausgeführt werden. Ein bevorzugtes Material ist Stahlblech.

In einer besonders bevorzugten Ausführungsform, auf die an anderer Stelle noch näher eingegangen wird, wird die Dicke der erfindungsgemäßen Führungsschiene in Abhängigkeit von einer bestimmten charakteristischen Abmessung der in Verbindung mit der Schiene verwendbaren Bearbeitungsmaschinen gewählt.

Die erfindungsgemäße Dickenreduzierung der Führungsschiene, die zu einer hinsichtlich der Transport- und Aufbewahrungsmöglichkeiten äußerst vorteilhaften Flexibilität bzw. Beweglichkeit der Schiene führt, ist auch vorteilhaft, wenn die Führungsschiene in Verbindung mit verschwenkbaren Bearbeitungsmaschinen zum Einsatz kommt.

Um diesen Vorteil zu erreichen, ist es im Prinzip ausreichend, wenn lediglich derjenige Randbereich der Schiene in erfindungsgemäßer Art und Weise dünn ausgeführt ist, der im Betrieb - d.h. bei an die Oberseite der Schiene angesetzter Bearbeitungsmaschine - dem relativ zur Schiene verschwenkbaren Werkzeug der Bearbeitungsmaschine zugewandt ist.

Demgemäß gemäß einer weiteren Ausführungsform der Erfindung vorgeschlagen, dass zumindest derjenige Randbereich der Schiene, der im Betrieb dem verschwenkbaren Werkzeug der Bearbeitungsmaschine zugewandt ist, derart dünn ausgeführt ist, dass die Schiene auch bei in der Ebene ihrer Oberseite verlaufender Werkzeugschwenkachse und mit minimalem Arbeitsabstand vom Rand der Schiene bzw. von einem maschinenfesten Rissanzeiger positioniertem Werkzeug vollständig außerhalb des vorzugsweise Werkzeugneigungen von 0° bis wenigstens 45° umfassenden Schwenkbereiches des Werkzeugs liegt.

Durch die dünne Ausführung der Schiene zumindest in ihrem maschinennahen Randbereich wird folglich ein Eingriff in den Schwenkbereich des Werkzeugs verhindert. Hierbei ist "dünn" auch im Hinblick auf die konkreten geometrischen Verhältnisse im maschinennahen Randbereich der Schiene zu verstehen. In dem in der Praxis häufigen Fall liegt bei gängigen Maschinen die Schwenkachse des Werkzeugs im auf die Schiene gesetzten Zustand in der Ebene der Schienenoberseite, wobei die der Schiene zugewandte Werkzeuginnenseite - z.B. die Innenseite des Sägeblatts einer Handkreissäge - in einer im Rahmen der vorliegenden Anmeldung auch als Arbeitsabstand bezeichneten geringen Entfernung zum Schienenrand verläuft, die kleiner als 1 mm ist.

Diese Entfernung entspricht etwa der Breite eines typischen, auf die Oberfläche des zu bearbeitenden Werkstücks gezeichneten Anrissstriches und damit der Spaltbreite zwischen Werkzeuginnenseite und einem maschinenfesten, meist an der Maschinengrundplatte angebrachten Rissanzeiger. Ein typischer Wert für diese Spaltbreite ist etwa 0,4 mm.

Hierbei ist also die Schiene zumindest in ihrem maschinenfesten Randbereich derart dünn ausgeführt, dass auch unter diesen Bedingungen - d.h. bei einem relativ großen Abstand der Werkzeugschwenkachse von der Unterseite der Schiene und bei einem relativ geringen Arbeitsabstand der Werkzeuginnenseite vom Schienenrand - die in der Praxis häufig benötigte Werkzeugneigung von zumindest 45° eingestellt werden kann, ohne dass der maschinennahe Randbereich der Führungsschiene dem Werkzeug dabei im Wege ist. In vorteilhafter Weise kann die dünne Führungsschiene folglich in Verbindung mit gängigen existierenden Maschinen eingesetzt werden, die diese geometrischen Bedingungen erfüllen.

Dabei ist von Vorteil, dass die Maschine auch zum Einstellen von sehr großen Neigungswinkeln nicht querversetzt zu werden braucht. Die Stelle, an der das Werkzeug mit der Oberfläche des zu bearbeitenden Werkstücks in Kontakt gelangt, ist erfindungsgemäß folglich unabhängig von dem Neigungswinkel des Werkzeugs relativ zu der dünnen Führungsschiene.

Um diese Vorteile zu erzielen, ist es zwar bevorzugt, aber nicht zwingend erforderlich, dass die Führungsschiene über ihre gesamte Breite so dünn ausgeführt ist wie in ihrem maschinennahen Randbereich. Grundsätzlich käme beispielsweise auch eine keilförmige Führungsschiene in Betracht, die in Verbindung mit entsprechend angepassten Bearbeitungsmaschinen bzw. Maschinengrundplatten ebenfalls die genannten Vorteile mit sich bringen würde.

Unabhängig davon, ob die Führungsschiene nur in ihrem maschinennahen Randbereich oder insgesamt in dieser Weise dünn ausgeführt ist, braucht die Führungsschiene in beiden Fällen nicht derart flexibel oder beweglich ausgebildet zu sein, um z.B. durch Aufrollen oder Aufwickeln in eine kompakte Transportkonfiguration überführt werden zu können. Insofern handelt es sich bei dem in Verbindung mit verschwenkbaren Bearbeitungsmaschinen vorteilhaften Aspekt des dünnen maschinennahen Randbereiches um einen von dem Aspekt der hinsichtlich der Aufbewahrung und des Transports vorteilhaften Flexibilität der Führungschiene grundsätzlich unabhängigen Gesichtspunkt, der über keinen unabhängigen Gegenstand der vorliegenden Anmeldung darstellt.

Vorteilhafte Ausführungsformen der erfindungsgemäßen Führungsschienen sind auch in den Unteransprüchen, der Beschreibung sowie der Zeichnung angegeben.

So kann als Führungsmittel für die Bearbeitungsmaschine eine Vielzahl von diskreten, in Längsrichtung mit Abstand voneinander angeordneten, insbesondere noppenartigen Führungsvorsprüngen auf der Oberseite der Schiene vorgesehen sein.

Bevorzugt ist es ferner, wenn die Führungsmittel durch Materialverformung, insbesondere durch Prägen, auf der Oberseite der Schiene hergestellt sind. Die Herstellung der erfindungsgemäßen Führungsschiene wird hierdurch erheblich vereinfacht.

Des Weiteren kann die Führungsschiene mit Versteifungsmitteln versehen sein, die der Schiene einerseits in der langgestreckten Benutzungskonfiguration eine erhöhte Formstabilität verleihen, andererseits ein Überführen in eine kompakte Transport- und/oder Aufbewahrungskonfiguration insbesondere durch Aufrollen oder Aufwickeln zulassen.

Vorzugsweise sind die Versteifungsmittel in Form von wenigstens einer Längsabkantung vorgesehen. Eine derartige Versteifung lässt sich bei der Herstellung der Führungsschiene auf denkbar einfache Weise realisieren.

Gemäß einer weiteren bevorzugten Ausführungsform der Erfindung weist die Führungsschiene an zumindest einem Ende einen im Betrieb über das Werkstück hinaus ragenden Ansetzbereich erhöhter Steifigkeit auf. Dieser Ansetzbereich kann derart ausgebildet sein, dass der an die Schiene anzusetzenden Bearbeitungsmaschine ein deren Inbetriebnahme unterstützender Widerstand entgegengesetzt wird. Hierdurch kann in vorteilhafter Weise z.B. erreicht werden, dass beim Aufsetzen einer Handkreissäge auf den dem zu bearbeitenden Werkstück vorgelagerten Ansetzbereich der Sägeblattschutz besonders zuverlässig automatisch zurückgeschwenkt wird.

Die Versteifung der Schiene in dem Ansetzbereich kann grundsätzlich auf beliebige Art und Weise erfolgen. Da der Ansetzbereich lediglich vergleichsweise kurz zu sein braucht, steht er der Herstellung einer kompakten Transportkonfiguration der Schiene nicht im Wege.

Ein zusätzlich versteifter Ansetzbereich ist jedoch nicht zwangsläufig erforderlich. Auch eine über ihre gesamte Länge gleich bleibende Flexibilitätseigenschaften aufweisende Führungsschiene kann in der Praxis problemlos eingesetzt werden.

Des Weiteren ist bevorzugt vorgesehen, dass die Unterseite der Schiene mit einem reibungserhöhenden Belag versehen ist. Der Belag ist vorzugsweise derart ausgestaltet, dass er auf einfache Weise auf die Unterseite der Schiene aufbringbar ist und so wenig wie möglich aufträgt, d.h. einen minimalen Beitrag zur Gesamtdicke der Schiene leistet. Der Belag kann in Form einer Gummierung oder Beflockung vorgesehen sein, wobei vorzugsweise kein textiles Material für den Belag verwendet wird. Hierdurch wird die Reinigung der Schienenunterseite erleichtert und einer Verschmutzung insbesondere durch Holzstaub entgegengewirkt.

In einer besonders bevorzugten Ausführung der Erfindung ist ein Belag vorgesehen, der durch ein Siebdruckverfahren auf die Schienenunterseite aufgebracht werden kann.

Vorzugsweise ist die Führungsschiene in Verbindung mit solchen Bearbeitungsmaschinen verwendbar, die auch ohne die Führungsschiene für eine Freihandbearbeitung benutzt werden können. Bei Handkreissägen beispielsweise dient dann die Unterseite der Maschinengrundplatte als Anlagefläche für das durch Ausführen von Freihandschnitten zu bearbeitende Werkstück. Die Maschinengrundplatte kann an ihrer Unterseite mit zumindest einer Längsnut versehen sein, die bei der Ausführung von Freihandschnitten nicht stört und bei geführten Schnitten mit entsprechenden Führungsmitteln auf der Oberseite der erfindungsgemäßen Führungsschiene zusammenwirkt.

Bei derartigen Führungsschienen handelt es sich folglich um separate, von den Bearbeitungsmaschinen getrennt vorliegende Gegenstände, die als Zubehör zu den auch ohne Führungsschiene verwendbaren Bearbeitungsmaschinen bezeichnet werden könnten. Die Länge derartiger Führungsschienen kann mehrere Meter betragen.

Die Lösung der der Erfindung zugrunde liegenden Aufgabe erfolgt gemäß einem weiteren Aspekt der Erfindung durch eine elektrische Bearbeitungsmaschine mit einer integrierten Führungsschiene, die an einer Maschineneinheit befestigt ist, welche längs der Führungsschiene bewegbar ist und ein im Betrieb bis unter die Führungsschiene vorstehendes Werkzeug aufweist, wobei die Führungsschiene in erfindungsgemäßer Art und Weise ausgebildet ist, d.h. bereichsweise flexibel oder beweglich und gegebenenfalls zumindest in ihrem maschinennahen Randbereich derart dünn ausgeführt, dass das Werkzeug problemlos verschwenkt werden kann, wie es vorstehend erläutert wurde.

Bevorzugt ist die feste Verbindung zwischen der Maschineneinheit und der Führungsschiene derart ausgelegt, dass - mit Ausnahme einer gegebenenfalls vorhandenen Verschwenkbarkeit des Werkzeugs relativ zur Führungsschiene - nur eine Bewegung der Maschineneinheit in Längsrichtung der Führungsschiene möglich ist und die Maschineneinheit nicht oder nicht ohne weiteres von der Führungsschiene abgenommen werden kann. Die Maschineneinheit und die Führungsschiene bilden somit eine als Ganzes handhabbare Einheit.

Eine derartige funktionelle Einheit aus Maschineneinheit mit Werkzeug und integrierter Führungsschiene ist z.B. zur Ausführung schneller Abrichtarbeiten von Vorteil, bei denen es zwar auf eine saubere Führung der Bearbeitungsmaschine am Werkstück, nicht jedoch auf eine Führung über große Entfernungen ankommt. Daher ist es bevorzugt, wenn die integrierte Führungsschiene eine vergleichsweise kurze Länge von weniger als 1 m aufweist. Nichtsdestoweniger kann auch die integrierte Führungsschiene grundsätzlich eine Länge von mehr als 1 m aufweisen, wobei dies insbesondere dann sinnvoll ist, wenn diese lange integrierte Führungsschiene in erfindungsgemäßer Art und Weise zumindest bereichsweise flexibel bzw. in sich beweglich ausgebildet ist, um in eine kompakte Transport- und/oder Aufbewahrungskonfiguration überführt werden zu können, und zwar während sie an der Maschineneinheit befestigt ist.

Dabei kann eine direkt mit der Führungsschiene zusammenwirkende, beispielsweise in Form eines Schlittens oder einer Grundplatte ausgebildete Basiseinheit derart ausgebildet sein, dass eine Benutzung der Maschineneinheit ohne Führungsschiene nicht möglich ist, im Fall einer Handkreissäge beispielsweise also keine Freihandschnitte durchgeführt werden können.

Wenn bei der erfindungsgemäßen Bearbeitungsmaschine die längs der Führungsschiene bewegbare Maschineneinheit eine verschwenkbare Werkzeugeinheit aufweist, dann liegt vorzugsweise die Schwenkachse der Werkzeugeinheit etwa in der Ebene der Oberseite der Führungsschiene.

Des Weiteren ist es bevorzugt, wenn die Schwenkachse der Werkzeugeinheit etwa in der Ebene der der Führungsschiene zugewandten Innenseite des Werkzeugs liegt. Alternativ ist es auch möglich, dass die Schwenkachse in der Mittelebene des Werkzeugs liegt, im Fall einer Handkreissäge beispielsweise also in der Mitte des Sägeblatts.

Ferner ist bevorzugt vorgesehen, dass der Abstand der der Führungsschiene zugewandten Innenseite des Werkzeugs von dem Rand der Führungsschiene bzw. von einem gegebenenfalls vorgesehenen Rissanzeiger etwa gleich der Stärke der Schiene in ihrem maschinennahen, d.h. dem Werkzeug zugewandten Randbereich ist.

Bevorzugt weist die Werkzeugeinheit einen Schwenkbereich auf, der es ermöglicht, Werkzeugneigungen von 0° bis wenigstens 45° bezogen auf eine parallel zur Oberseite der Führungsschiene 11 verlaufenden Ebene einzustellen.

Gemäß einem weiteren Aspekt der Erfindung wird die der Erfindung zugrunde liegende Aufgabe durch ein mobiles Bearbeitungssystem gelöst, das eine elektrische Bearbeitungsmaschine, eine Führungsschiene für die Bearbeitungsmaschine, die in erfindungsgemäßer Art und Weise flexibel bzw. beweglich ausgebildet ist, sowie einen bevorzugt eine quaderförmige Grundform aufweisenden Transport- und Aufbewahrungskoffer mit einem Stauraum umfasst, dessen größte Abmessung kleiner als die Länge der Führungsschiene in der langgestreckten Benutzungskonfiguration ist und in dem die Bearbeitungsmaschine zusammen mit der in eine kompakte, insbesondere aufgerollte oder aufgewickelte Transport- und/oder Aufbewahrungskonfiguration gebrachten Führungsschiene vollständig unterbringbar ist.

In vorteilhafter Weise ermöglicht die flexible Ausführung der erfindungsgemäßen Führungsschiene ihre platzsparende Unterbringung gemeinsam mit der jeweiligen Bearbeitungsmaschine in einem im Vergleich zur Benutzungslänge der Führungsschiene kleinen Behältnis. Folglich braucht z.B. ein Handwerker auf seinem Weg zur Baustelle mit dem die Bearbeitungsmaschine und die Führungsschiene enthaltenden Koffer lediglich einen einzigen Gegenstand mit sich zu führen, wodurch ein äußerst praktisches mobiles Bearbeitungssystem geschaffen wird.

In Abhängigkeit von den jeweiligen Gegebenheiten kann die flexible Führungsschiene in ihrer Transport- bzw. Aufbewahrungskonfiguration auch in bereits existierenden Transport- und Aufbewahrungskoffern zusammen mit den jeweiligen Bearbeitungsmaschinen untergebracht werden.

Die Erfindung wird im Folgenden beispielhaft unter Bezugnahme auf die Zeichnung beschrieben. Es zeigen:
- Fig. 1: teilweise eine erfindungsgemäße Führungsschiene in Verbindung mit einer Handkreissäge gemäß einer Ausführungsform der Erfindung,
- Fig. 2: einen rein schematischen Querschnitt durch eine erfindungsgemäße Führungsschiene mit aufgesetzter Bearbeitungsmaschine,
- Fig. 3: die Einzelheit X von Fig. 2 in vergrößerter Darstellung zur Erläuterung der geometrischen Verhältnisse im Bereich des maschinennahen Randes der erfindungsgemäßen Führungsschiene,
- Fig. 4: verschiedene Ansichten einer nicht in voller Länge dargestellten Führungsschiene gemäß einer Ausführungsform der Erfindung, und
- Fig. 5: ein erfindungsgemäßes mobiles Bearbeitungssystem.

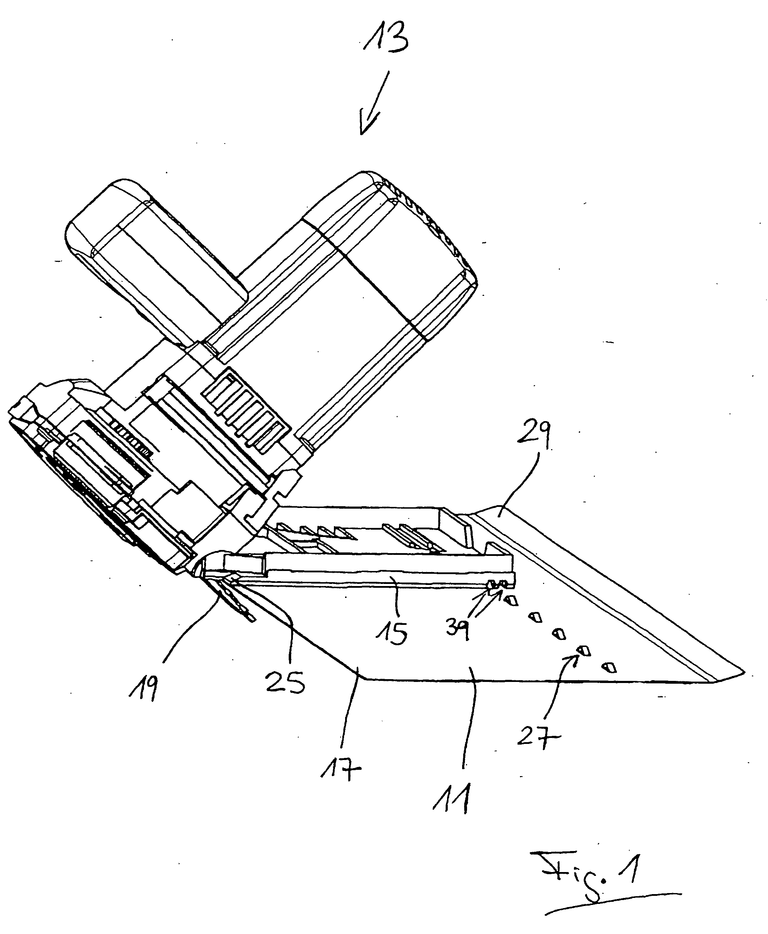

Fig. 1 zeigt eine erfindungsgemäße dünne Führungsschiene 11, die aus einem Stahlblech mit einer Stärke von etwa 0,4 mm hergestellt ist. Zur Führung einer Grundplatte 15 einer Bearbeitungsmaschine 13, hier einer Handkreissäge, ist die Schiene 11 auf ihrer Oberseite mit in einer Reihe angeordneten Führungsnoppen 27 versehen, die durch Prägen des Schienenmaterials gebildet wurden.

Zur Erhöhung ihrer Steifigkeit ist die Schiene 11 über ihre gesamte Länge mit einer in Längsrichtung verlaufenden Abkantung 29 versehen.

Fig. 1 zeigt eine herkömmliche Bearbeitungsmaschine 13, deren Grundplatte 15 auf ihrer Unterseite zwei parallel versetzte Längsnuten 39 aufweist. Wie im Einleitungsteil erläutert wurde, werden die beiden Längsnuten 39 in Verbindung mit herkömmlichen dicken Führungsschienen zum Querversetzen der Bearbeitungsmaschine 13 benötigt.

Wie nachstehend näher erläutert wird, ist in Verbindung mit der erfindungsgemäßen Führungsschiene 11 ein Querversetzen der Bearbeitungmaschine 13 nicht erforderlich, so dass eine einzige Längsnut 39 in der Grundplatte 15 genügen würde.

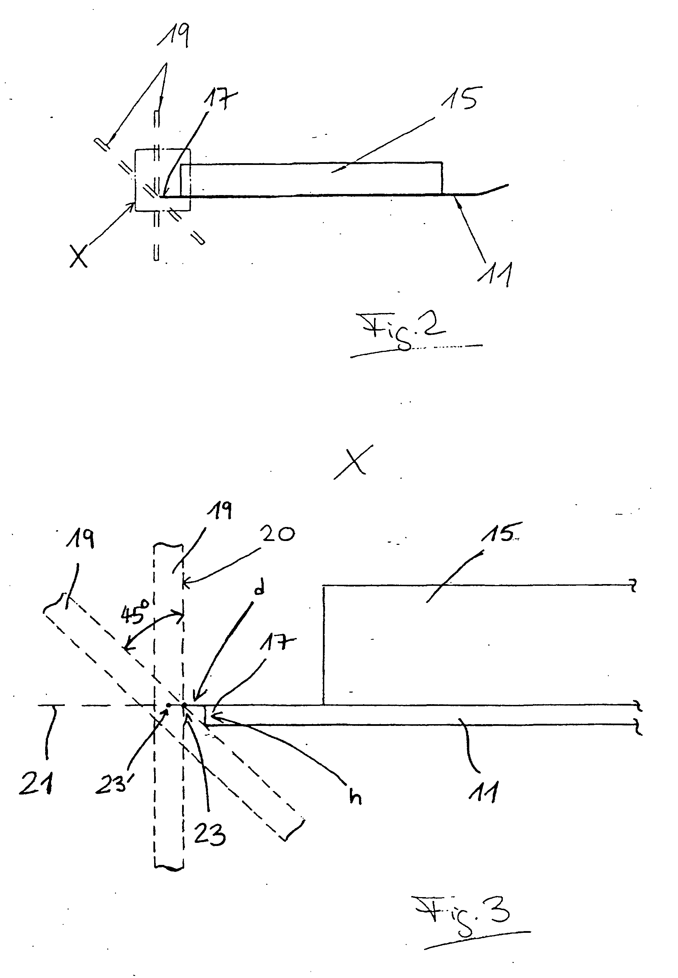

Fig. 2 zeigt in gestrichelten Linien das Sägeblatt 19 der Handkreissäge, und zwar einmal in vertikaler Stellung zur Ausführung gerader Schnitte und einmal in einer um 45° gegenüber der Führungsschiene 11 geneigten Stellung zur Ausführung von Schräg- bzw. Gehrungsschnitten.

Die Grundplatte 15 der Handkreissäge endet vor dem maschinennahen Randbereich 17 der Führungsschiene 11. In Fig. 2 nicht dargestellt ist ein in Fig. 1 gezeigter, an der Grundplatte 15 ausgebildeter Rissanzeiger 25, der bis an den Schienenrand heranreicht und bündig mit diesem abschließt.

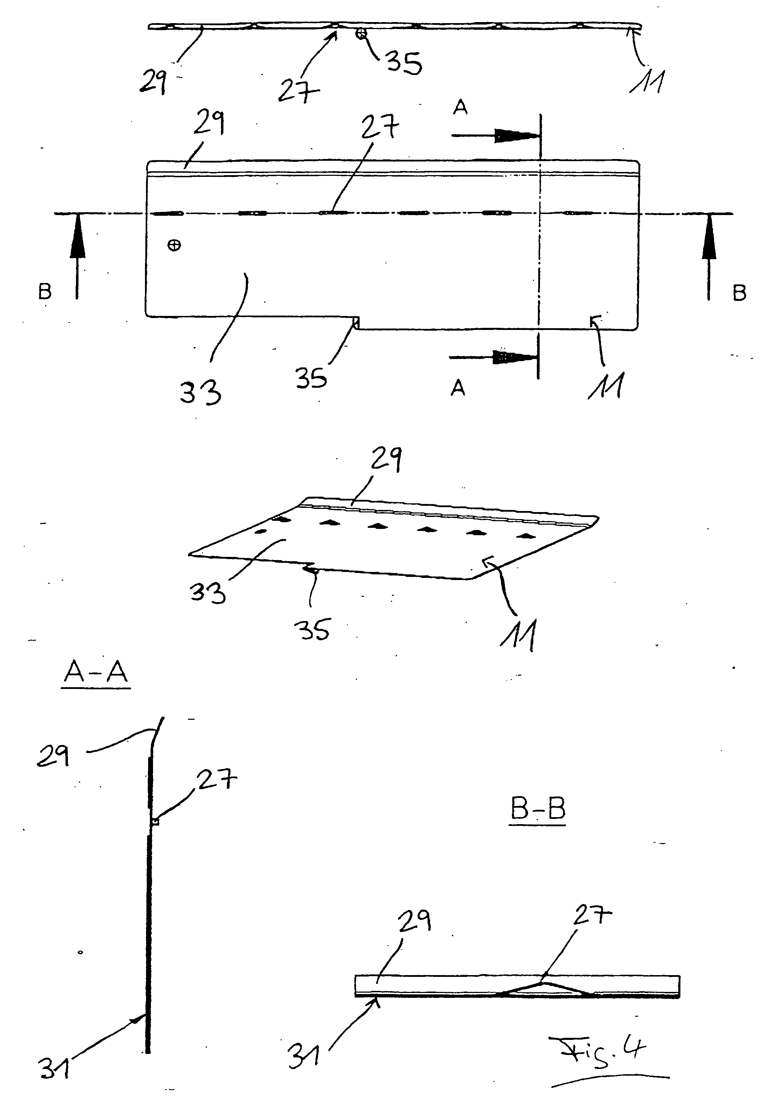

Die vergrößert dargestellte Einzelheit X von Fig. 3 zeigt, dass die das Werkzeug 19 aufweisende Bearbeitungsmaschine derart ausgebildet ist, dass beim Verschwenken relativ zur Grundplatte 15 und damit zur Führungsschiene 11 die Schwenkachse 23 in der auch als Schwenkachsenebene 21 bezeichneten Ebene der Unterseite der Grundplatte 15 liegt, die bei auf die Führungsschiene 11 aufgesetzter Maschine mit der Oberseite der Führungsschiene 11 zusammenfällt.

Des Weiteren zeigt Fig. 3, dass die der Schiene 11 zugewandte Innenseite 20 des Sägeblatts 19 in einem Abstand d vom maschinennahen Rand der Schiene 11 verläuft. Die Schwenkachse 23 liegt in der durch diese Werkzeuginnenseite 20 festgelegten Ebene. Bei Werkzeugneigungen von 45°, wie ebenfalls in Fig. 3 dargestellt, ist somit zwischen der nunmehr schräg verlaufenden Innenseite 20 des Werkzeugs 19 und der Unterseite der Grundplatte 15 ein Abstand h vorhanden. Die erfindungsgemäße dünne Führungsschiene weist eine Stärke auf, die maximal dem Abstand h entspricht, so dass sie - wenn der maximale Verschwenkungswinkel des Sägeblatts 19 45° beträgt - dem Sägeblatt 19 auch bei maximalem Verschwenkungswinkel nicht im Wege ist.

Für Bearbeitungsmaschinen mit größeren oder kleineren maximalen Verschwenkungswinkeln kann die Stärke der erfindungsgemäßen Fürrungsschiene 11 in Abhängigkeit von dem Abstand d entsprechend angepasst werden.

Bei gängigen Bearbeitungsmaschinen, insbesondere Handkreissägen, entspricht der Abstand d der Breite des Spalts zwischen der Werkzeuginnenseite 20 und dem Rissanzeiger 25 (vgl. Fig. 1) und beträgt weniger als 1 mm, vorzugsweise zwischen 0,3 und 0,5 mm.

In Fig. 3 ist außerdem eine alternative Lage der Werkzeugschwenkachse 23' dargestellt, die in der Mittelebene des Sägeblatts 19 liegt. Hierdurch ergeben sich andere geometrische Verhältnisse, die eine entsprechende Anpassung der Stärke der Führungsschiene 11 unter gleichzeitiger Berücksichtigung des maximalen Verschwenkungswinkels des Sägeblatts 19 erfordern.

In jedem Fall wird durch die erfindungsgemäße dünne Ausführung der Führungsschiene 11 der bei maximalem Verschwenkungswinkel des Werkzeugs 19 verbleibende Raum zwischen der Unterseite der Grundplatte 15 und der Innenseite 20 des Werkzeugs 19 für die Führungsschiene 11 genutzt.

Die erfindungsgemäße Führungsschiene 11 ist grundsätzlich auch mit solchen Bearbeitungsmaschinen verwendbar, deren Schwenkachsen - im an die Schiene 11 angesetzten Zustand betrachtet - nicht in der Ebene der Oberseite der Führungsschiene verlaufen. Je nach Lage der Schwenkachsenebene steht in vertikaler Richtung dann mehr oder weniger Platz für die Führungsschiene zur Verfügung. Der Vorteil der erfindungsgemäßen Führungsschiene liegt jedenfalls darin, dass auch dann, wenn - wie es bei den gängigen existierenden Maschinen der Fall ist - die Schwenkachse der Maschine im Bereich der Schienenoberseite liegt und - bei großen Neigungswinkeln von z.B. 45° betrachtet - die für die Führungsschiene zur Verfügung stehende lichte Höhe sehr gering ist, ein Querversetzen der Maschine und damit ein Arbeiten unter für unterschiedliche Verschwenkungswinkel verschiedenen Bedingungen vermieden werden kann.

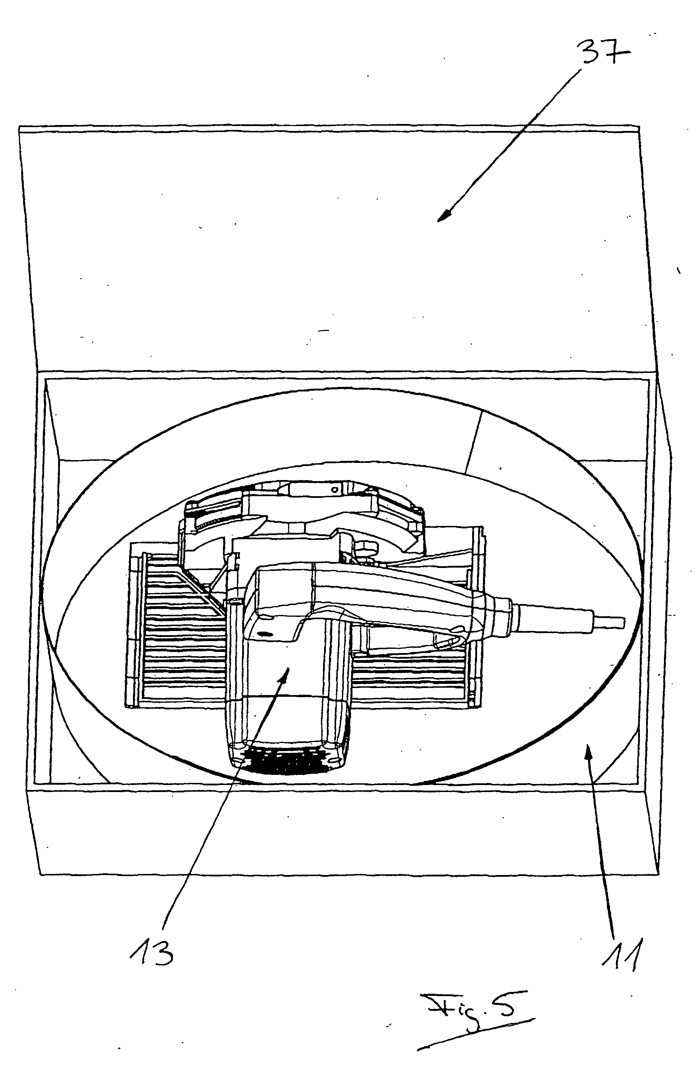

Die verschiedenen Ansichten der Führungsschiene 11 von Fig. 4 zeigen insbesondere die Ausgestaltung der durch Anprägen erzeugten Führungsnoppen 27, deren Höhe in der hier dargestellten Ausführungsform kleiner ist als der erhöhte Schienenrand an der Abkantung 29.

Die Führungsschiene 11 ist nicht in voller Länge dargestellt und kann grundsätzlich jede beliebige Länge aufweisen. Der gemäß Fig. 4 in der Draufsicht linke, eine reduzierte Breite aufweisende Endbereich der Schiene 11 dient als ein Ansetzbereich 33 für die jeweilige Bearbeitungsmaschine. Bei an das jeweils zu bearbeitende Werkstück angelegter Führungsschiene 11 ragt der Ansetzbereich 33 über das Werkstück hinaus. Eine nach unten gebogene Lasche 35 dient als Anschlagmittel zur Positionierung der Führungsschiene 11 am Werkstück in Längsrichtung sowie als Öffnungshilfe für eine untere Schutzhaube, wie sie beispielsweise bei Handkreissägen häufig vorhanden sind. Der Ansetzbereich 33 kann durch nicht dargestellte Versteifungsmittel gegenüber dem übrigen, bei Benutzung auf dem Werkstück aufliegenden Bereich der Schiene 11 versteift werden, um das Ansetzen der Maschine zu erleichtern.

In den vergrößert dargestellten Schnittansichten A-A und B-B ist zu erkennen, dass die Führungsschiene 11 an ihrer Unterseite einen reibungserhöhenden Belag 31 aufweist, der vorzugsweise in Form einer Gummierung vorgesehen ist und beispielsweise durch ein Siebdruckverfahren auf die Schienenunterseite aufgebracht wird.

Das in Fig. 5 dargestellte erfindungsgemäße mobile Bearbeitungssystem umfasst einen quaderförmigen Transport- und Aufbewahrungskoffer, in welchem eine Bearbeitungsmaschine 13, hier eine Handkreissäge, zusammen mit einer erfindungsgemäßen flexiblen Führungsschiene 11 verstaut werden kann, die hier zu einem geschlossenen Oval aufgerollt ist. Der in dem Koffer 37 zur Verfügung stehende Raum kann durch die erfindungsgemäße Führungsschiene 11 folglich optimal genutzt werden.

In einer alternativen, nicht dargestellten Ausführungsform, die im Einleitungsteil bereits erläutert wurde, kann die Führungsschiene ein integraler Bestandteil der Maschine sein. Mit Ausnahme von ggf. vorhandenen zusätzlichen Befestigungsmitteln zur Anbringung an der Maschine kann eine derartige integrierte Führungsschiene genau so ausgebildet sein, wie es vorstehend im Einleitungsteil sowie anhand der Figuren beschrieben wurde.

### Bezugszeichenliste

- 11: Führungsschiene
- 13: Bearbeitungsmaschine, Handkreissäge
- 15: Grundplatte, Basiseinheit
- 17: Randbereich
- 19: Werkzeug
- 20: Werkzeuginnenseite
- 21: Schwenkachsenebene
- 23, 23': Schwenkachse
- 25: Rissanzeiger
- 27: Führungsmittel
- 29: Abkantung
- 31: reibungserhöhender Belag
- 33: Ansetzbereich
- 35: Anschlagmittel
- 37: Transport- und Aufbewahrungskoffer
- 39: Längsnut der Grundplatte

- d: Arbeitsabstand
- h: Stärke der Führungsschiene

## Patentansprüche

1. Führungsschiene für elektrische Bearbeitungsmaschinen (13), insbesondere für Handkreissägen, Stichsägen und Oberfräsen, deren Oberseite als Führung für die Bearbeitungsmaschine (13), insbesondere für eine Maschinengrundplatte (15), ausgebildet ist und die mit ihrer Unterseite an ein zu bearbeitendes Werkstück anlegbar ist,
**dadurch gekennzeichnet,**
**dass** die Schiene (11) zumindest bereichsweise flexibel ausgebildet und aus einer langgestreckten Benutzungskonfiguration in eine kompakte Transport- und/oder Aufbewahrungskonfiguration überführbar ist.

2. Führungsschiene nach Anspruch 1,
**dadurch gekennzeichnet,**
**dass** ihre Stärke (h) zumindest in dem dünnen Randbereich (17) höchstens etwa gleich dem Abstand (d) zwischen der Innenseite (20) des Werkzeugs (19) und dem Rand der Schiene (11) bzw. einem maschinenfesten Rissanzeiger (25) ist.

3. Führungsschiene nach einem der vorhergehenden Ansprüche,
**dadurch gekennzeichnet,**
**dass** ihre Stärke (h) zumindest in dem dünnen Randbereich (17) weniger als 1 mm beträgt und bevorzugt in einem Bereich von etwa 0,2 bis 0,6 mm, insbesondere von etwa 0,3 bis 0,5 mm liegt.

4. Führungsschiene nach einem der vorhergehenden Ansprüche,
**dadurch gekennzeichnet,**
**dass** sie durch Aufrollen oder Aufwickeln in eine geschlossene Ringform mit bevorzugt kreisförmiger, elliptischer oder ovaler Gestalt überführbar ist.

5. Führungsschiene nach einem der vorhergehenden Ansprüche,
**dadurch gekennzeichnet,**
**dass** sie einstückig ausgebildet ist.

6. Führungsschiene nach einem der vorhergehenden Ansprüche,
**dadurch gekennzeichnet,**
**dass** sie aus Blechmaterial hergestellt ist, insbesondere aus Stahlblech.

7. Führungsschiene nach einem der vorhergehenden Ansprüche,
**dadurch gekennzeichnet,**
**dass** als Führungsmittel für die Bearbeitungsmaschine (13) eine Vielzahl von diskreten, in Längsrichtung mit Abstand voneinander angeordneten, insbesondere noppenartigen Führungsvorsprüngen (27) auf der Oberseite der Schiene (11) vorgesehen ist.

8. Führungsschiene nach einem der vorhergehenden Ansprüche,
**dadurch gekennzeichnet,**
**dass** als Führungsmittel für die Bearbeitungsmaschine (13) durch Materialverformung, insbesondere durch Prägen, gebildete Führungserhebungen (27) auf der Oberseite der Schiene (11) vorgesehen sind.

9. Führungsschiene nach einem der vorhergehenden Ansprüche,
**dadurch gekennzeichnet,**
**dass** sie mit Versteifungsmitteln (29) versehen ist, die ihr einerseits in der langgestreckten Benutzungskonfiguration eine erhöhte Formstabilität verleihen, andererseits ein Überführen in eine kompakte Transport- und/oder Aufbewahrungskonfiguration insbesondere durch Aufrollen oder Aufwickeln zulassen.

10. Führungsschiene nach Anspruch 9,
**dadurch gekennzeichnet,**
**dass** die Versteifungsmittel in Form von wenigstens einer Längsabkantung (29) vorgesehen sind.

11. Führungsschiene nach einem der vorhergehenden Ansprüche,
**dadurch gekennzeichnet,**
**dass** sie an zumindest einem Ende einen im Betrieb über das Werkstück hinausragenden Ansetzbereich (33) erhöhter Steifigkeit aufweist, wobei bevorzugt der Ansetzbereich (33) zur Positionierung der Schiene (11) am Werkstück dienende Anschlagmittel (35) aufweist, die insbesondere gleichzeitig zum Öffnen einer unteren Schutzhaube z.B. einer Handkreissäge ausgebildet sind.

12. Führungsschiene nach einem der vorhergehenden Ansprüche,
**dadurch gekennzeichnet,**
**dass** die Unterseite der Schiene (11) mit einem reibungserhöhenden Belag (31) insbesondere in Form einer Gummierung oder Beflockung versehen ist, wobei bevorzugt der Belag (31) durch ein Siebdruckverfahren aufgebracht ist.

13. Führungsschiene nach einem der vorhergehenden Ansprüche,
**dadurch gekennzeichnet,**
**dass** sie eine Länge von mehr als 1 m und insbesondere von mehreren Metern aufweist.

14. Elektrische Bearbeitungsmaschine, insbesondere Handkreissäge, Stichsäge oder Oberfräse, mit einer integrierten Führungsschiene (11), die an einer längs der Führungsschiene (11) bewegbaren und ein im Betrieb bis unter die Führungsschiene (11) vorstehendes Werkzeug (19) aufweisenden Maschineneinheit befestigt ist und die Merkmale eines der Ansprüche 1 bis 13 aufweist.

15. Bearbeitungsmaschine nach Anspruch 14,
**dadurch gekennzeichnet,**
**dass** die Maschineneinheit eine Basiseinheit (15), an der die Führungsschiene (11) befestigt ist, und eine das Werkzeug (19) umfassende Werkzeugeinheit umfasst, wobei die Werkzeugeinheit relativ zur Basiseinheit (15) und damit zur Führungsschiene (11) verschwenkbar ist.

16. Bearbeitungsmaschine nach Anspruch 15,
**dadurch gekennzeichnet,**
**dass** die Schwenkachse (23) der Werkzeugeinheit etwa in der Ebene (21) der Oberseite der Führungsschiene (11) liegt.

17. Bearbeitungsmaschine nach Anspruch 15 oder 16,
**dadurch gekennzeichnet,**
**dass** die Schwenkachse (23) der Werkzeugeinheit etwa in der Ebene der der Führungsschiene (11) zugewandten Innenseite (20) des Werkzeugs (19) liegt.

18. Bearbeitungsmaschine nach einem der Ansprüche 15 bis 17,
**dadurch gekennzeichnet,**
**dass** Werkzeugneigungen von 0° bis wenigstens 45° bezogen auf eine parallel zur Oberseite der Führungsschiene (11) verlaufende Ebene einstellbar sind.

19. Bearbeitungsmaschine nach einem der Ansprüche 15 bis 18,
**dadurch gekennzeichnet,**
**dass** der Abstand der der Führungsschiene (11) zugewandten Innenseite (20) des Werkzeugs (19) von dem Rand der Führungsschiene (11) bzw. einem maschinenfesten, insbesondere an der Basiseinheit ausgebildeten Rissanzeiger (25) etwa gleich der Stärke der Schiene (11) in ihrem dem Werkzeug (19) zugewandten Randbereich (17) ist.

20. Mobiles Bearbeitungssystem mit
- einer elektrischen Bearbeitungsmaschine (13), insbesondere einer Handkreissäge, Stichsäge oder Oberfräse,
- einer Führungsschiene (11) für die Bearbeitungsmaschine (13) mit den Merkmalen eines der Ansprüche 1 bis 13, und
- einem bevorzugt eine quaderförmige Grundform aufweisenden Transport- und Aufbewahrungskoffer (37) mit einem Stauraum, dessen größte Abmessung kleiner als die Länge der Führungsschiene (11) in der langgestreckten Benutzungskonfiguration ist und in dem die Bearbeitungsmaschine (13) zusammen mit der in eine kompakte, insbesondere aufgerollte oder aufgewickelte Transport- und/oder Aufbewahrungskonfiguration gebrachten Führungsschiene (11) vollständig unterbringbar ist.

21. Bearbeitungssystem nach Anspruch 20,
**dadurch gekennzeichnet,**
**dass** die Führungsschiene (11) aufgerollt oder aufgewickelt auf der Seite liegend, dabei eine Gestalt mit kreisförmiger, elliptischer oder ovaler Transport- und/oder Aufbewahrungskonfiguration einnehmend und die Bearbeitungsmaschine (13) in dem von der aufgerollten oder aufgewickelten Führungsschiene (11) umschlossenen Bereich liegend oder stehend im Transport- und Aufbewahrungskoffer (37) unterbringbar sind.

22. System mit
- einer elektrischen Bearbeitungsmaschine (13), insbesondere einer Handkreissäge, Stichsäge oder Oberfräse, und
- einer Führungsschiene (11) für die Bearbeitungsmaschine (13) mit den Merkmalen eines der Ansprüche 1 bis 13,
wobei die Führungsschiene (11) derart dünn ausgeführt ist, dass sie auch bei in der Ebene (21) ihrer Oberseite verlaufender Werkzeugschwenkachse (23, 23') und mit einem von Null verschiedenen Arbeitsabstand (d) vom Rand der Schiene (11) bzw. von einem maschinenfesten Rissanzeiger (25) positioniertem Werkzeug (19) vollständig außerhalb des vorzugsweise Werkzeugneigungen von 0° bis wenigstens 45° umfassenden Schwenkbereiches des Werkzeugs (19) liegt.

## Claims

1. A guide rail for electrical machining tools (13), in particular for hand-held circular saws, jigsaws and routers whose upper side is made as a guide for the machining tool (13), in particular for a tool base plate (15) and whose lower side can be placed onto a workpiece to be machined,
**characterized in that**
the rail (11) is flexible at least regionally and can be transformed from an elongated use configuration into a compact transport and/or storage configuration.

2. A guide rail in accordance with claim 1, **characterized in that**, at least in the thin rim region (17), its thickness (h) is at most approximately equal to the spacing (d) between the inner side (20) of the driven tool (19) and the edge of the rail (11) and/ or between the inner side (20) of the driven tool (19) and an alignment indicator (25) fixed to the machining tool.

3. A guide rail in accordance with any one of the preceding claims, **characterized in that**, at least in the thin rim region (17), its thickness (h) amounts to less than 1 mm and preferably lies in a range from approximately 0.2 to 0.6 mm, in particular from approximately 0.3 to 0.5 mm.

4. A guide rail in accordance with any one of the preceding claims, **characterized in that** it can be transformed by rolling it up or winding it up into a closed ring shape with a preferably circular, elliptical or oval form.

5. A guide rail in accordance with any one of the preceding claims, **characterized in that** it is made in one piece.

6. A guide rail in accordance with any one of the preceding claims, **characterized in that** it is manufactured of a sheet metal material, in particular of sheet steel.

7. A guide rail in accordance with any one of the preceding claims, **characterized in that** a plurality of discrete guide projections (27), which are arranged with a spacing from one another in the longitudinal direction and which are in particular protrusions, are provided on the upper side of the rail (11) as guide means for the machining tool (13).

8. A guide rail in accordance with any one of the preceding claims, **characterized in that** elevated guide sections (27), which are made by material deformation, in particular by stamping, are provided on the upper side of the rail (11) as guide means for the machining tool (13).

9. A guide rail in accordance with any one of the preceding claims, **characterized in that** it is provided with stiffening means (29) which, on the one hand, provide it with an increased stability of shape in the elongated use configuration and, on the other hand, permit a transformation into a compact transport and/or storage configuration, in particular by rolling it up or winding it up.

10. A guide rail in accordance with claim 9, **characterized in that** the stiffening means are provided in the form of at least one folded edge (29).

11. A guide rail in accordance with any one of the preceding claims, **characterized in that** it has an engagement region (33) of increased stiffness, which projects beyond the workpiece in operation, at least at one end, with the engagement region (33) preferably having abutment means (35) which serve for the positioning of the rail (11) at the workpiece and which are in particular simultaneously made to open a lower protective hood, e.g. of a hand-held circular saw.

12. A guide rail in accordance with any one of the preceding claims, **characterized in that** the lower side of the rail (11) is provided with a friction-increasing layer (31), in particular in the form of a gummed layer or a flock layer, with the layer (31) preferably being applied by a silk screen printing process.

13. A guide rail in accordance with any one of the preceding claims, **characterized in that** it has a length of more than 1 m and in particular of a plurality of meters.

14. An electrical machining tool, in particular a hand-held circular saw, a jigsaw or a router, with an integrated guide rail (11) which is secured to a machining tool unit movable along the guide rail (11) and having a driven tool (19), which projects below the guide rail (11) in operation, and has the features of any one of the claims 1 to 13.

15. A machining tool in accordance with claim 14, **characterized in that** the machining tool unit includes a base unit (15), to which the guide rail (11) is secured, and a tool unit comprising the driven tool (19), with the tool unit being pivotable relative to the base unit (15) and so to the guide rail (11).

16. A machining tool in accordance with claim 15, **characterized in that** the pivot axis (23) of the tool unit lies approximately in the plane (21) of the upper side of the guide rail (11).

17. A machining tool in accordance with claim 15 or claim 16, **characterized in that** the pivot axis (23) of the tool unit lies approximately in the plane of the inner side (20) of the driven tool (19) facing the guide rail (11).

18. A machining tool in accordance with any one of the claims 15 to 17, **characterized in that** tool inclinations of 0° to at least 45° can be set with respect to a plane extending parallel to the upper side of the guide rail (11).

19. A machining tool in accordance with any one of the claims 15 to 18, **characterized in that** the spacing of the inner side (20) of the driven tool (19) facing the guide rail (11) from the edge of the guide rail (11) and/or from an alignment indicator (25) fixed to the machining tool, in particular to the base unit, is approximately equal to the thickness of the rail (11) in its edge region (17) facing the driven tool (19).

20. A mobile machining system comprising
- an electrical machining tool (13), in particular a hand-held circular saw, a jigsaw or a router;
- a guide rail (11) for the machining tool (13) having the features of any one of the claims 1 to 13; and
- a transport and storage case (37) preferably having a basic shape in the form of a parallelepiped and with a storage space whose largest dimension is smaller than the length of the guide rail (11) in the elongated use configuration and in which the machining tool (13) can be fully accommodated together with the guide rail (11) brought into a compact transport and/or storage configuration, in particular a rolled up or wound up transport and/or storage configuration.

21. A machining system in accordance with claim 20, **characterized in that** the guide rail (11) lying rolled up or wound up on its side and adopting a form with a circular, elliptical or oval transport and/or storage configuration and the machining tool (13) lying or standing in the region surrounded by the rolled up or wound up guide rail (11) can be accommodated in the transport and storage case (37).

22. A system comprising
- an electrical machining tool (13), in particular a hand-held circular saw, a jigsaw or a router; and
- a guide rail (11) for the machining tool (13) having the features of any one of the claims 1 to 13;
wherein the guide rail (11) is made so thin that it also lies completely outside the range of pivoting of the driven tool (19) preferably including tool inclinations from 0° to at least 45°, when the tool pivot axis (23, 23') extends in the plane (21) of its upper side and when a driven tool (19) is positioned with a working spacing (d) other than zero from the edge of the rail (11) and/or from an alignment indicator (25) fixed to the machining tool.

## Revendications

1. Rail de guidage pour machines d'usinage électriques (13), en particulier pour des scies circulaires à main, pour des scies sauteuses et pour des fraises défonceuses, dont la face supérieure est réalisée à titre de guidage pour la machine d'usinage (13), en particulier pour une plaque de base (15) d'une machine, et qui peut être appliqué par sa face inférieure sur une pièce à oeuvrer,
**caractérisé en ce que** le rail (11) est réalisé de façon au moins localement flexible, et peut être converti d'une configuration d'utilisation allongée en une configuration compacte de transport et/ou de rangement.

2. Rail de guidage selon la revendication 1, **caractérisé en ce que** son épaisseur (h) est, au moins dans la zone de bordure mince (17), au plus approximativement égale à la distance (d) entre la face intérieure (20) de l'outil (19) et le bord du rail (11) ou d'un indicateur de tracé (25) solidaire de la machine.

3. Rail de guidage selon l'une des revendications précédentes, **caractérisé en ce que** son épaisseur (h), au moins dans la zone de bordure mince (17), est inférieure à 1 mm et tombe de préférence dans une plage d'environ 0,2 à 0,6 mm, en particulier d'environ 0,3 à 0,5 mm.

4. Rail de guidage selon l'une des revendications précédentes, **caractérisé en ce qu'**il peut être converti en une forme annulaire fermée, par enroulement ou embobinage, avec une configuration de préférence à forme circulaire, elliptique ou ovale.

5. Rail de guidage selon l'une des revendications précédentes, **caractérisé en ce qu'**il est réalisé d'une seule pièce.

6. Rail de guidage selon l'une des revendications précédentes, **caractérisé en ce qu'**il est réalisé à partir d'un matériau en tôle, en particulier à partir d'une tôle d'acier.

7. Rail de guidage selon l'une des revendications précédentes, **caractérisé en ce qu'**il est prévu, à titre de moyens de guidage pour la machine d'usinage (13), une pluralité de saillies de guidage (27) discrètes, agencées à distance les unes des autres en direction longitudinale, et en particulier analogues à des boutons, sur la face supérieure du rail (11).

8. Rail de guidage selon l'une des revendications précédentes, **caractérisé en ce qu'**il est prévu, à titre de moyens de guidage pour la machine d'usinage (13), des bosses de guidage (27) formées par déformation de matière, en particulier par estampage, sur la face supérieure du rail (11).

9. Rail de guidage selon l'une des revendications précédentes, **caractérisé en ce qu'**il est pourvu de moyens de rigidification (29) qui lui confèrent d'une part une stabilité de forme accrue dans la configuration d'utilisation allongée, et qui permettent d'autre part une conversion en une configuration compacte de transport et/ou de rangement, en particulier par enroulement ou par embobinage.

10. Rail de guidage selon la revendication 9, **caractérisé en ce que** les moyens de rigidification sont prévus sous la forme d'au moins un rabattement longitudinal (29).

11. Rail de guidage selon l'une des revendications précédentes, **caractérisé en ce qu'**il comporte, à au moins une extrémité, une zone de pose (33) à rigidité accrue et dépassant au-delà de la pièce à oeuvrer, ladite zone de pose (33) présentant de préférence des moyens de butée (35) servant au positionnement du rail (11) sur la pièce à oeuvrer et qui sont simultanément réalisés pour ouvrir un capot protecteur inférieur, par exemple d'une scie circulaire à main.

12. Rail de guidage selon l'une des revendications précédentes, **caractérisé en ce que** la face inférieure du rail (11) est pourvue d'un revêtement (31) augmentant la friction, en particulier sous la forme d'un revêtement caoutchouteux ou d'un flocage, ledit revêtement (31) étant de préférence appliqué par un procédé de sérigraphie.

13. Rail de guidage selon l'une des revendications précédentes, **caractérisé en ce qu'**il a une longueur de plus de 1 mètre et en particulier de plusieurs mètres.

14. Machine d'usinage électrique, en particulier scie circulaire à main, scie sauteuse ou fraise défonceuse, comprenant un rail de guidage intégré (11), qui est fixé sur une unité de machine déplaçable le long du rail de guidage (11) et comportant un outil (19) qui dépasse au-dessous du rail de guidage (11) en utilisation, et qui présente les caractéristiques de l'une des revendications 1 à 13.

15. Machine d'usinage selon la revendication 14, **caractérisée en ce que** l'unité de machine comprend une unité de base (15) qui est fixée sur le rail de guidage (11), et une unité à outil qui comprend l'outil (19), ladite unité à outil étant capable de basculer par rapport à l'unité de base (15) et ainsi par rapport au rail de guidage (11).

16. Machine d'usinage selon la revendication 15, **caractérisée en ce que** l'axe de basculement (23) de l'unité à outil est situé approximativement dans le plan (21) de la face supérieure du rail de guidage (11).

17. Machine d'usinage selon l'une ou l'autre des revendications 15 et 16, **caractérisée en ce que** l'axe de basculement (23) de l'unité à outil est situé approximativement dans le plan de la face intérieure (20), tournée vers le rail de guidage (11), de l'outil (19).

18. Machine d'usinage selon l'une des revendications 15 à 17, **caractérisée en ce que** l'outil est susceptible d'être placé à des inclinaisons de 0° à au moins 45°, par référence à un plan parallèle à la face supérieure du rail de guidage (11).

19. Machine d'usinage selon l'une des revendications 15 à 18, **caractérisée en ce que** la distance de la face intérieure (20), tournée vers le rail de guidage (11), de l'outil (19) à la bordure du rail de guidage (11) ou à un indicateur de tracé (25) solidaire de la machine, réalisé en particulier sur l'unité de base, est approximativement égale à l'épaisseur du rail (11) dans une zone de bordure (17) tournée vers l'outil (19).

20. Système d'usinage mobile, comprenant :
-- une machine d'usinage électrique (13), en particulier une scie circulaire à main, une scie sauteuse ou une fraise défonceuse,
-- un rail de guidage (11) pour la machine d'usinage (13) avec les caractéristiques de l'une des revendications 1 à 13, et
-- un coffre de transport et de rangement (37), présentant de préférence une forme de base parallélépipédique avec un volume de rangement dont la plus grande dimension est inférieure à la longueur du rail de guidage (11) dans la configuration d'utilisation allongée, et dans lequel la machine d'usinage (13) peut être entièrement logée, conjointement avec le rail de guidage (11) mis sous une configuration compacte de transport et/ou de rangement, en particulier par enroulement ou par embobinage.

21. Système d'usinage selon la revendication 20, **caractérisé en ce que** le rail de guidage (11), qui est enroulé ou embobiné et qui repose sur le côté, en adoptant ainsi une forme avec configuration de transport et/ou de rangement de forme circulaire, elliptique ou ovale, et la machine d'usinage (13) couchée ou debout dans la région enfermée par le rail de guidage (11) enroulé ou embobiné, peuvent être logés dans le coffre de transport et de rangement (37).

22. Système, comprenant :
-- une machine d'usinage électrique (13), en particulier une scie circulaire à main, une scie sauteuse ou une fraise défonceuse, et
-- un rail de guidage (11) pour la machine d'usinage (13), comportant les caractéristiques de l'une des revendications 1 à 13,
dans lequel le rail de guidage (11) est réalisé aussi mince que, même avec un outil (19) positionné de telle façon que son axe de basculement (23, 23') s'étend dans le plan (21) de la face supérieure du rail et avec une distance de travail (d) différente de zéro par rapport à la bordure du rail (11) ou à un indicateur de tracé (25) solidaire de la machine, le rail se trouve entièrement à l'extérieur de la plage de basculement de l'outil (19), qui inclut de préférence des inclinaisons de l'outil de 0° à au moins 45°.
